# EUROPÄISCHE PATENTSCHRIFT

(11) **EP 0 493 319 B1**
(45) Veröffentlichungstag und Bekanntmachung des Hinweises auf die Patenterteilung: **04.09.1996**
(21) Anmeldenummer: 91810962.0
(22) Anmeldetag: 11.12.1991
(51) Int. Cl.: F16B 7/04, F16B 7/10, E04C 2/52

(54) **Verbindung von zwei Profilstangen, Profilstangen für ein Tragsystem und Tragsystem für Sanitärapparate sowie Verfahren zum Erstellen eines solchen Tragsystems**
Connection of two profiles,profiles for a support system and support system for sanitary devices as well as method of producing such support systems
Connexion de deux profilés, profilés pour un système de support et système de support pour appareils sanitaires ainsi que procédé pour la production d'un tel système support

(30) Priorität: 21.12.1990 CH 4087/90
(43) Veröffentlichungstag der Anmeldung: 01.07.1992
(73) Patentinhaber: Geberit AG, CH-8645 Jona (CH)
(72) Erfinder: Warkus, Clemens, W-7794 Wald (DE); Eggenberger, Walter, CH-8630 Tann-Rüti (CH)
(74) Vertreter: Groner, Manfred

(56) Entgegenhaltungen:
- WO-A-90/07652
- AU-B- 514 900
- DE-A- 2 623 814
- DE-A- 2 931 026
- DE-A- 3 410 499

## Beschreibung

Die Erfindung betrifft insbesondere eine Verbindung nach Anspruch 1. Die Erfindung betrifft ebenfalls für eine solche Verbindung besonders geeignete Profilstangen, ein Tragsystem für Sanitärapparate sowie ein Verfahren zum Erstellen eines solchen Tragsystems.

Eine Verbindung der genannten Art ist aus der AU-B-514 900 bekannt geworden. Bei dieser greift ein Kopf des Verbindungsteils mit zwei Klemmzungen in eine Längsnut ein. Mittels einer Schraube weden die Klemmzungen gespreizt und damit durch Reibschluss eine Verschiebund des Verbindungsteils in Längsrichtung dieser Längsnut verhindert. Die Schraube bedingt die Bearbeitung einer Profilstange und bei einem Nachlassen der Spreizkraft oder bei hohen Belastungen kann eine Verschiebung in Längsrichtung der Nut eintreten. Die DE-U-8 815 336 offenbart eine Vorrichtung zum verstellbaren Verlängern des Mastes eines Segelbrettes. Zur Längenverstellung in vergleichsweise kleinen Schritten weist der hohle Mast an seinem unteren Ende ein ringförmiges Widerlagen auf, das an einer Innenseite Vorsprünge aufweisen, die in korrespondierende Vertiefungen in eine Rinne eines Verlängerungsstücks eingreifen. Der Eingriff der Vorsprünge kann eine Verschiebung des Mastes nur nach unten verhindern. Eine Verbindung von zwei rechtwinklig zueinander angeordneten Profilstangen ist weder möglich noch vorgesehen und bei einem solchen Mast auch nicht zu erwarten.

Aus der DE-A-35 28 334 ist sodann eine Verbindung an einem Tragsystem für Sanitärapparate bekannt, die einen Verbindungsteil aus zwei plattenförmigen Teilen aufweist, der an zwei Enden in U-förmige Profilschienen eingreift. Aehnliche Verbindungen und Tragsysteme sind aus DE-GMS-76 02 215, 76 26 246 und 80 00 819 bekannt.

Es sind somit bereits zahlreiche Verbindungen für Tragsysteme zur Montage von Sanitärapparaten bekannt. Gemeinsam ist allen, dass sie eine möglichst einfache und dennoch stabile Montage auch vergleichsweise schwerer Sanitärapparate und der dazu notwendigen Leitungen und dergleichen ermöglichen sollen. Erschwerend ist bei solchen Tragsystemen der Umstand, dass sie in der Regel individuell und an die jeweilige Bausituation genau angepasst werden müssen. Trotzdem soll eine einfache und übersichtliche Lagerhaltung und eine kostengünstige Herstellung sowie Montage möglich sein.

Der Erfindung liegt somit die Aufgabe zugrunde, eine Verbindung der genannten Art zu schaffen, die sich besonders für ein Tragsystem zur Montage von Sanitärapparaten eignet und die eine einfache Lagerhaltung und Montage ermöglicht. Die Aufgabe ist durch die Erfindung gemäss Anspruch 1 gelöst. Besonders geeignete Profilstangen, ein Tragsystem sowie ein Verfahren zum Erstellen eines solchen Tragsystems sind in weiteren unabhängigen oder abhängigen Ansprüchen gekennzeichnet.

Ein Aspekt der Erfindung wird darin gesehen, dass die Profilstangen im Querschnitt gleich ausgebildet sind und in allen vier Raumrichtungen miteinander verbindbar sind. Wesentlich ist zudem, dass ein rechteckiger Rahmen erstellt werden kann, bei dem alle Profilstangen und alle Verbindungsteile in einer Ebene angeordnet sind. Also beispielsweise im Gegensatz zur Verbindung nach der genannten DE-A-34 10 499, bei der die Lasche und die Profilstangen sich in zwei verschiedenen Ebenen befinden. Dadurch ist die Symmetrie der Verbindung und eines daraus erstellten Tragsystems grundsätzlich erhöht. Mit der erfindungsgemässen Verbindung ist bei räumlicher Anordnung der Profilstangen eine einheitliche und einfache Verbindung und damit eine bessere Planbarkeit möglich. Eine Vormontage durch den Installateur oder im Werk ist wesentlich einfacher als bisher. Da nur ein Profil vorgesehen ist, ist die Lagerhaltung einfacher. Die einheitliche Verbindungsart ermöglicht zudem kürzere Montagezeiten am Bau und damit auch geringere Kosten.

Die vorteilhaften Merkmale ergeben sich aus der nachfolgenden Beschreibung sowie der Zeichnung. Ausführungsbeispiele der Erfindung werden nachfolgend anhand der Zeichnung näher erläutert. Es zeigen:
- Fig. 1: ein Schnitt durch eine erfindungsgemässe Vorrichtung mit zwei T-förmig angeordneten Profilstangen,
- Fig. 2: ein Schnitt entlang der Linie II-II in Fig. 1,
- Fig. 3: ein Schnitt entlang der Linie III-III in Fig. 1,
- Fig. 4: ein Schnitt entlang der Linie IV-IV in Fig. 1,
- Fig. 5: ein Schnitt entlang der Linie V- V in Fig. 1,
- Fig. 6: ein Schnitt durch eine erfindungsgemässe Vorrichtung nach einer Variante, wobei zwei parallel zueinander verlaufende Profilstäbe miteinander lösbar verbunden sind,
- Fig. 7: ein Teilschnitt durch eine erfindungsgemässe Vorrichtung nach einer weiteren Variante,
- Fig. 8: eine Ansicht der Stirnseite des in Fig. 7 gezeigten Verbindungsteils,
- Fig. 9: ein Schnitt entlang der Linie IX-IX in Fig. 7,
- Fig. 10: ein Schnitt entlang der Linie X-X in Fig. 7,
- Fig. 11: ein Schnitt gemäss Fig. 10, jedoch vor dem Verdrehen des Verbindungsteils,
- Fig. 12a bis 12e: schematisch eine Montagefolge beim Erstellen eines erfindungsgemässen Tragsystems,
- Fig. 13a und 13b: schematisch ein Tragrahmen für ein WC-Becken und einen Waschtisch,
- Fig. 14: ein Querschnitt durch eine an einem Baukörper befestigte Profilstange,
- Fig. 15: ein Querschnitt durch eine Profilstange mit einer daran befestigten Gipskartonplatte, und
- Fig. 16: schematisch ein erfindungsgemässes Tragsystem mit Hülle.

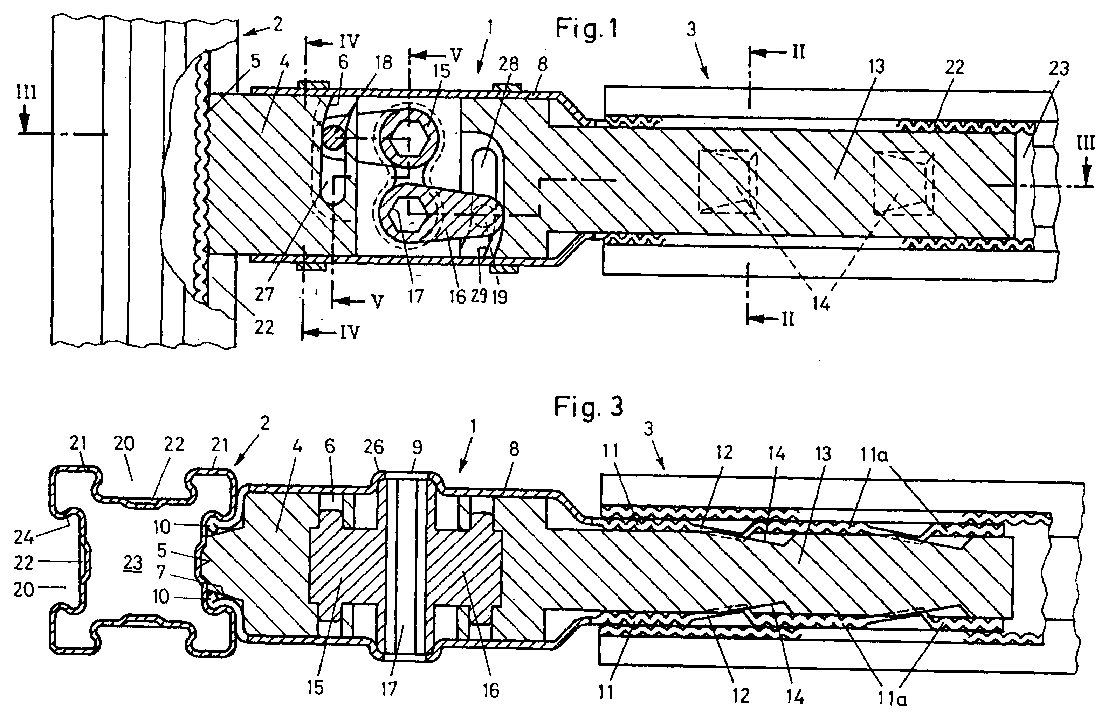

Die in den Figuren 1 bis 5 gezeigte Vorrichtung weist einen Verbindungsteil 1 auf, der eine hohle Profilstange 2 mit einer quer zu dieser verlaufenden Profilstange 3 verbindet. Die beiden Profilstangen 2 und 3 sind gleich ausgebildet und beispielsweise aus Metall hergestellt. Wie der Querschnitt der Profilstange 2 in Fig. 3 zeigt, weist die Profilstange 2 vier gleiche schwalbenschwanzförmige Längsnuten 20 auf, die sich über die ganze Länge der Profilstange erstrecken. Die Nuten 20 weisen in ihrem Boden jeweils eine im Schnitt wellenförmige Wandung 22 auf. Wie die Fig. 1 links zeigt, ist diese Wandung 22 innen- und aussenseitig profiliert. Die Wandungen 22 erstrecken sich vorzugsweise ebenfalls über die ganze Länge des Profilstabes 2. Die Flanken der Nuten 20 werden durch jeweils zwei im Schnitt etwa herzförmige Flansche 21 gebildet. Wie ersichtlich ist die Profilstange 2 im Querschnitt drehsymmetrisch. Das gleiche gilt auch für die Profilstange 3.

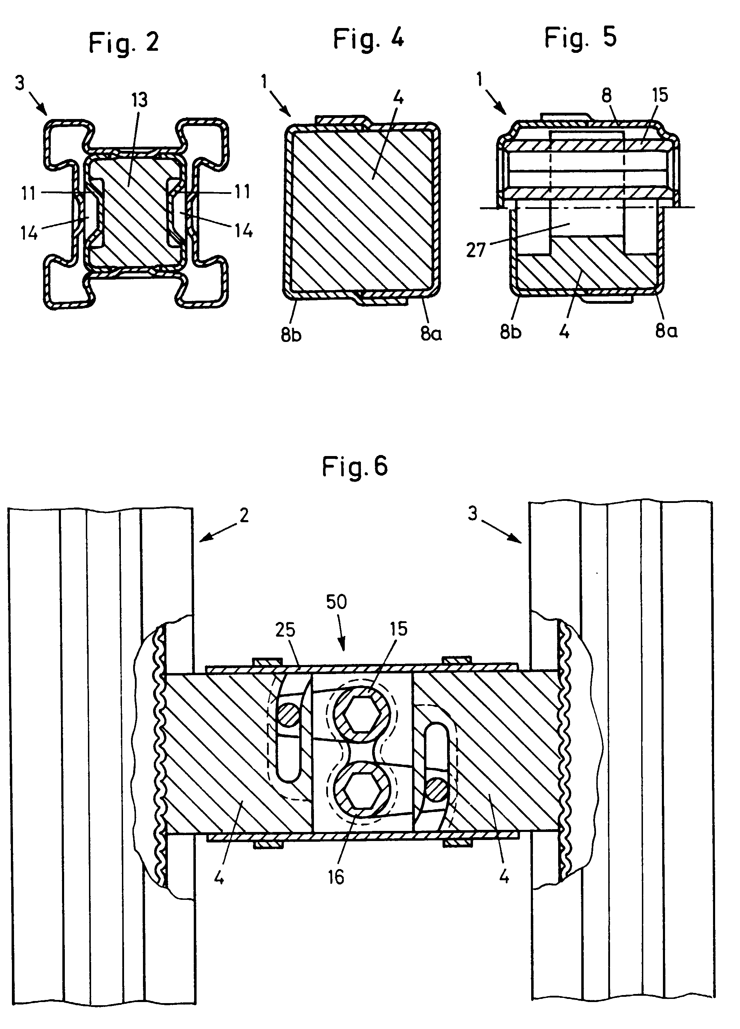

Der Verbindungsteil 1 besitzt ein Lagergehäuse 8, das beispielsweise aus Metallblech hergestellt ist und aus zwei sich überlappenden Teilen 8a und 8b besteht (Fig. 4). In das Lagergehäuse 8 sind zwei Keile 4 und 13 eingesetzt, die mit zwei unabhängig voneinander betätigbaren Lagerhebeln 15 und 16 in Längsrichtung des Lagergehäuses 8 verschiebbar sind. Die Lagerhebel 15 und 16 sind in Ausstülpungen 26 des Lagergehäuses 8 drehbar gelagert und weisen sechskantige Oeffnungen 17 auf, in die durch Oeffnungen 9 des Lagergehäuses ein Inbuss-Schlüssel eingesetzt werden kann. Die Lagerhebel 15 und 16 greifen jeweils mit einem Nocken 18 bzw. 19 in eine Ausnehmung 27 bzw. 28 des entsprechenden Keils ein. Beim Schwenken des Lagerhebels 15 bzw. 16 gleitet der Nocken 18 bzw. 19 entlang einer Steuerfläche 6 bzw. 29 und verschiebt den Keil 4 bzw. 13 so, dass er in das Lagergehäuse 8 gezogen oder in Gegenrichtung nach Aussen verschoben wird.

Der Keil 4 besitzt an einem Ende zwei symmetrische Keilflächen 7, die mit zwei am Lagergehäuse 8 angebrachten Klemmzungen 10 so zusammenwirken, dass diese Klemmzungen 10 gegen geneigte Innenflächen 24 der Profilstange 2 geklemmt werden. Dadurch ist eine reibschlüssige Verbindung des Verbindungsteils 1 mit der Profilstange 2 gewährleistet. Wird der Keil 4 durch Verschwenken des Lagerhebels 15 in eine hier nicht gezeigte Position zurückgezogen, so sind die Klemmzungen 10 frei und das Verbindungsteil 1 kann von der Profilstange 2 abgezogen werden.

Der Keil 4 besitzt an seiner Stirnseite eine Profilierung 5, die korrespondierend zur Profilierung der Wandung 22 ausgebildet ist. In der in der Zeichnung gezeigten Arbeitsstellung des Keils 4 ist die Profilierung 5 des Keils 4 in Eingriff mit der aussenseitigen Profilierung der Wandung 22. In dieser Position ist ein Zurückweichen des Keils 4 durch die gezeigte Stellung des Lagerhebels 15 verhindert. Der Eingriff des Keils 4 mit der Wandung 22 verhindert wirksam, dass der Verbindungsteil 1 in Längsrichtung der Profilstange 2 verschoben werden kann.

Der Keil 13 kann in ähnlicher Weise mit dem Lagerhebel 16 im Lagergehäuse 8 nach rechts oder links verschoben werden. Hierzu wird in die Sechskantöffnung 17 ein entsprechender Inbuss-Schlüssel eingesetzt. Der Keil 13 wirkt mit zwei Laschen 11 zusammen, die axial in den Innenraum 23 der Profilstange 3 eingeschoben sind. In der gezeigten Position spreizt der Keil 13 die beiden Laschen 11 und drückt sie innenseitig gegen gegenüberliegende Wandungen 22 der Profilstange 3. Zur Spreizung der Laschen 11 sind Keilflächen 12 und 14 an den Laschen 11 und am Keil 13 vorgesehen. Die Laschen 11 weisen mehrere im Längsschnitt wellenförmige Wandungen 11a auf, die wenigstens aussenseitig wie die Wandungen 22 profiliert sind. Die Wandungen 11a sind bei gespreizten Laschen 11 somit formschlüssig mit den Wandungen 22 der Profilstange 3 verbunden. Wird der Keil 13 durch eine Schwenkbewegung des Lagerhebels 16 nach links verschoben, so kann der Verbindungsteil 1 axial aus der Profilstange herausgezogen werden, wobei die Laschen 11 zum Keil hin ausweichen können.

Die Verbindungen des Verbindungsteils 1 zur Profilstange 2 und zur Profilstange 3 können somit unabhängig voneinander hergestellt und gelöst werden. Zum Verschieben des Verbindungsteils 1 entlang der Profilstange 2 muss lediglich der Keil 4 im Lagergehäuse 8 zurückgezogen werden, worauf die form- und reibschlüssigen Verbindungen gelöst werden. Beim zurückgezogenen Keil 4 kann der Verbindungsteil 1 in der Längsnut 20 beliebig in Längsrichtung der Profilstange 2 verschoben und an beliebiger Stelle kann durch Vorschieben des Keils 4 die Verbindung wieder hergestellt werden. Indem die Laschen 11 mehr oder weniger tief in die Profilstange 3 eingeschoben werden, kann der Abstand der beiden Profilstangen in begrenztem Mass eingestellt werden. Denkbar ist auch eine Ausführung, bei welcher die beiden Keile 4 und 13 gemeinsam verstellt werden.

Die Fig. 6 zeigt eine weitere Ausführung der erfindungsgemässen Vorrichtung, bei welcher mit einem Verbindungsteil 50 zwei parallel zueinander verlaufende Profilstangen 2 und 3 miteinander verbunden werden. Bei dieser Ausführung sind in einem Lagergehäuse 25 zwei gleiche Keile 4 angeordnet, die wie oben bereits erläutert ausgebildet sind und die einzel mit einem Lagerhebel 15 bzw. 16 betätigt werden. Das Lagergehäuse 25 weist hier nicht gezeigte Klemmbacken auf, die den Klemmbacken 10 der eingangs erläuterten Ausführung entsprechen. Die Profilstangen 2 und 3 können auch hier völlig gleich ausgebildet sein. Denkbar ist auch eine Ausführung, bei der in einem Lagergehäuse mehr als zwei Keile 4 zum Verbinden von mehr als zwei Profilstangen angeordnet sind.

Um zwei Profilstäbe miteinander zu verbinden, werden diese am einen oder anderen Ende auf die gewünschte Länge abgelängt. Eine weitere Bearbeitung der Profilstäbe ist nicht erforderlich. Mit dem Verbindungsteil 1 können die beiden Profilstäbe in T-förmiger Anordnung oder mit dem Verbindungsteil 50 in paralleler Anordnung miteinander verbunden werden. Als Werkzeug ist hier lediglich ein Inbuss-Schlüssel erforderlich, mit dem die beiden Keile in eine zurückgezogene Position gebracht werden. Nach dem die Klemmzungen 10 bzw. die Laschen 11 in eine Nut 20 bzw. in den Innenraum 23 eingesetzt sind, werden die Keile 4 bzw. 13 in die gezeigten Positionen nach aussen bewegt. Der Verbindungsteil 1 bzw. 50 ist dann fest mit beiden Profilstangen verbunden. Da der Keil 4 stirnseitig vergleichsweise breit an der Wandung 22 anliegt, wird sichergestellt, dass der Verbindungsteil 1 bzw. 50 genau vertikal zum Profilstück 2 ausgerichtet ist und dass diese Ausrichtung auch bei Einwirkung vergleichsweise grosser Kräfte beibehalten wird. Selbstverständlich können an einem Profilstück 2 auch mehrere Verbindungsteile 1 bzw. 50 angebracht werden. In einfacher Weise können dadurch räumliche und sehr tragkräftige Gerüste erstellt werden. Solche Gerüste eignen sich besonders für die Installation von sanitären Apparaturen.

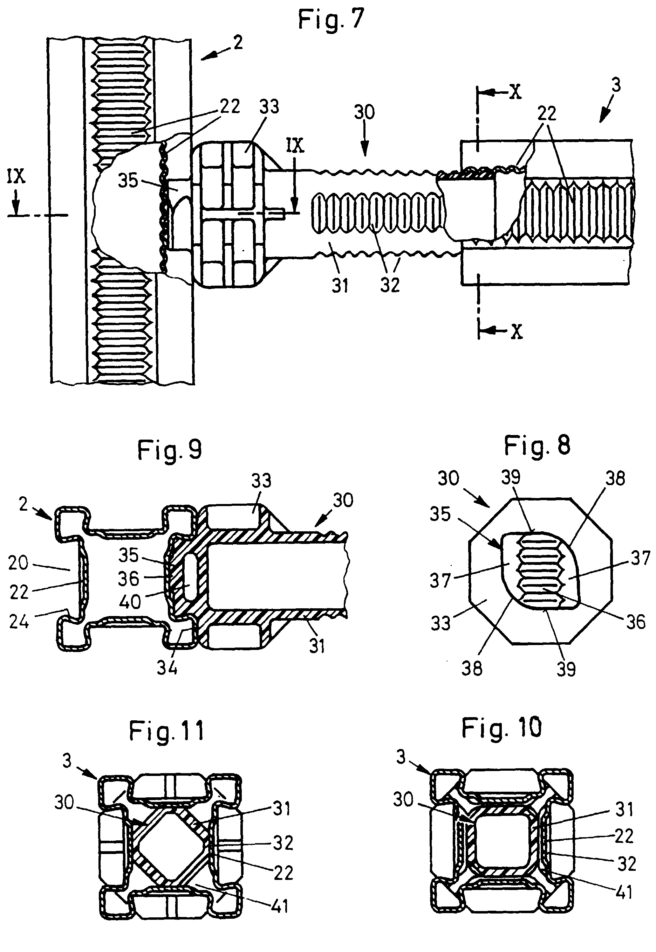

Die Figuren 7 bis 11 zeigen eine erfindungsgemässe Vorrichtung, die einen Verbindungsteil 30 aufweist, der besonders kostengünstig, vollständig aus Kunststoff herstellbar ist. Der Verbindungsteil 30 besitzt einen Schaft 31, der hohl ist und einen quadratischen querschnitt aufweist. Die vier Kanten des Schaftes 31 besitzen ein sich im wesentlichen über den ganzen Schaft 31 erstreckendes wellenförmiges Profil 32, das korrespondierend zur Profilierung der Wandung 22 der Profile 2 und 3 ausgebildet ist.

Am Schaft 30 angeformt sind ein Kragen 33 mit einer Schulter 34 sowie ein Kopf 35. Der Kragen 33 und der KOpf 35 sind in Fig. 8 in Ansicht von vorne und in Fig. 9 in Längsschnitt gezeigt. Der Kopf 35 ist stirnseitig mit einer wellenförmigen Profilierung 36 versehen, die ebenfalls korrespondierend zur Profilierung der Wandung 22 ausgebildet ist. Neben der Profilierung 36 sind am Kopf 35 zwei seitlich vorspringende Flügel 37 angeformt, die im montierten Zustand eine Schwalbenschwanznut 20 seitlich hintergreifen, wie in Fig. 9 gezeigt. Die Flügel 37 verlaufen quer zu den Rillen der Profilierung 36 und sind im Uebergang zu Seitenflächen 39 in drehsymmetrischer Anordnung mit Rundungen 38 versehen. Der Abstand der beiden Seitenflächen 39 voneinander ist gleich der kleinsten Breite der Schwalbenschwanznut 20. Sind die Seitenflächen 39 parallel zur Schwalbenschwanznut 20 ausgerichtet, so kann der Kopf 35 dennoch quer zum Profil 2 in diese Nut 20 eingesetzt oder aus dieser herausgehoben werden. Wird hingegen der so eingesetzte Kopf 35 um 45° um die Längsachse des Verbindungsteils 30 gedreht, so werden die Flügel 37 im Bereich der Rundungen 38 in Eingriff mit den Innenflächen 24 der Profilstange 2 gebracht und der Kopf 35 damit in der Nut 20 verklemmt. Gleichzeitig mit dieser Drehbewegung des Verbindungsteils 30 wird die Profilierung 36 des Kopfes 35 zur Profilierung 22 der Profilstange 2 ausgerichtet und in Eingriff gebracht. Hierbei erlaubt ein Hohlraum 40 hinter der Profilierung 36 ein elastisches Ausweichen von Wandungen des Kopfes 35 beim Herstellen der Verbindung. Ist die Verbindung zwischen dem Verbindungsteil 30 und der Profilstange 2 hergestellt, so sind somit die Profilierungen 36 und 22 miteinander verzahnt und durch die Flügel 37 ist der Kopf 35 lösbar mit der Nut 20 verklemmt. Zum Lösen der Verbindung wird der Verbindungsteil 30 in Gegenrichtung um 45° gedreht, und zwar in der Drehrichtung, in der die Rundungen 38 auf die Innenflächen 24 auflaufen und sich von diesen schliesslich entfernen. Hierbei wird auch die Verzahnung der Profile 36 und 22 aufgehoben und der Verbindungsteil 30 kann in Längsrichtung der Nut 20 verschoben oder aus dieser herausgehoben werden. Ist die Verbindung gefügt, so verhindert der Eingriff der beiden Profile 36 und 22 auch hier, dass der Verbindungsteil 30 in Längsrichtung der Profilstange 2 unter Last verschoben wird. Trotz der hohen Stabilität kann die Verbindung allein durch eine Drehung um 45° gefügt oder gelöst werden. Gleichzeitig kann eine Verbindung zu einer weiteren Profilstange 3 hergestellt bzw. gelöst werden, wie nachfolgend näher erläutert ist.

Um den Verbindungsteil 30 mit der Profilstange 3 zu verbinden, wird der Schaft 31 zur Profilstange 3, wie in Fig. 11 gezeigt, gedreht und in dieser Ausrichtung in den Hohlraum der Profilstange 3 eingeschoben. Hierbei sind die Profilierungen 32 in den aufgeweiteten Kanten 41 der Profilstange 3 frei verschiebbar. Wird nun der Schaft 31 um 45° in die in Fig. 10 gezeigte Stellung gedreht, so werden die Profilierungen 32 in Eingriff mit den Profilierungen 22 der Profilstange 3 gebracht. In Längsrichtung sind der Verbindungsteil 30 und die Profilstange 3 dann verrastet und können in dieser Richtung gegeneinander nicht mehr verschoben werden. Auch hier ist ein Lösen der Verbindung mit einer Drehung um 45° jederzeit möglich.

Beim Verbinden der beiden Profilstangen 2 und 3 mit dem Verbindungsteil 30 werden mit einer Drehung um 45° beide Stangen 2 und 3 mit dem Verbindungsteil 30 gleichzeitig verbunden. Im Unterschied dazu können bei Verwendung der Verbindungsteile 1 bzw. 50 die beiden Profilstangen unabhängig voneinander mit dem Verbindungsteil verbunden werden. Der Verbindungsteil 30 kann hingegen sehr kostengünstig im Spritzgussverfahren aus Kunststoff hergestellt werden und ist demnach auch korrosionsbeständig und leicht.

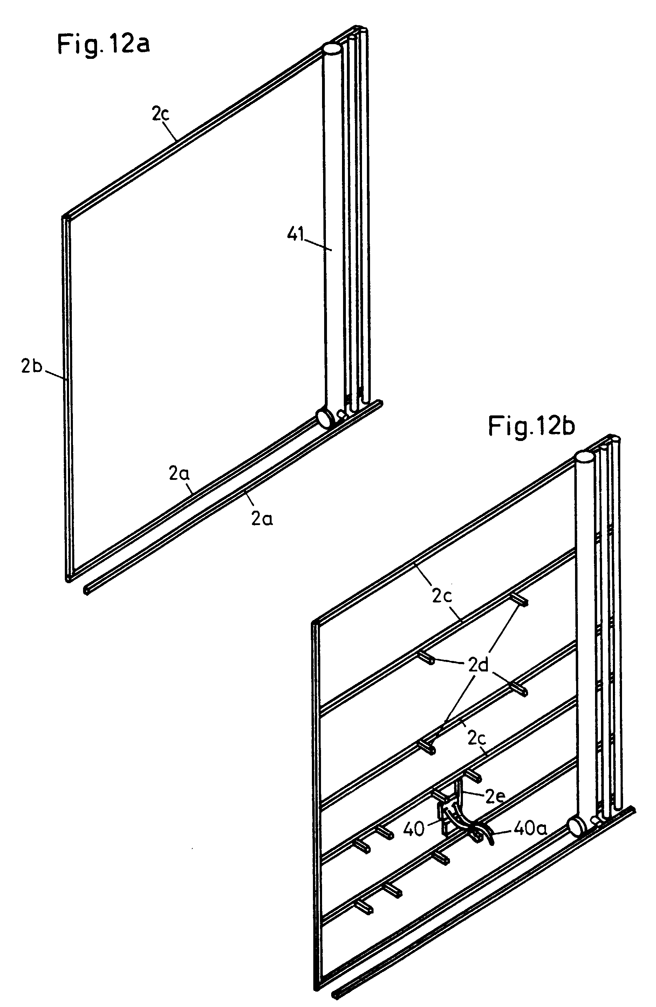

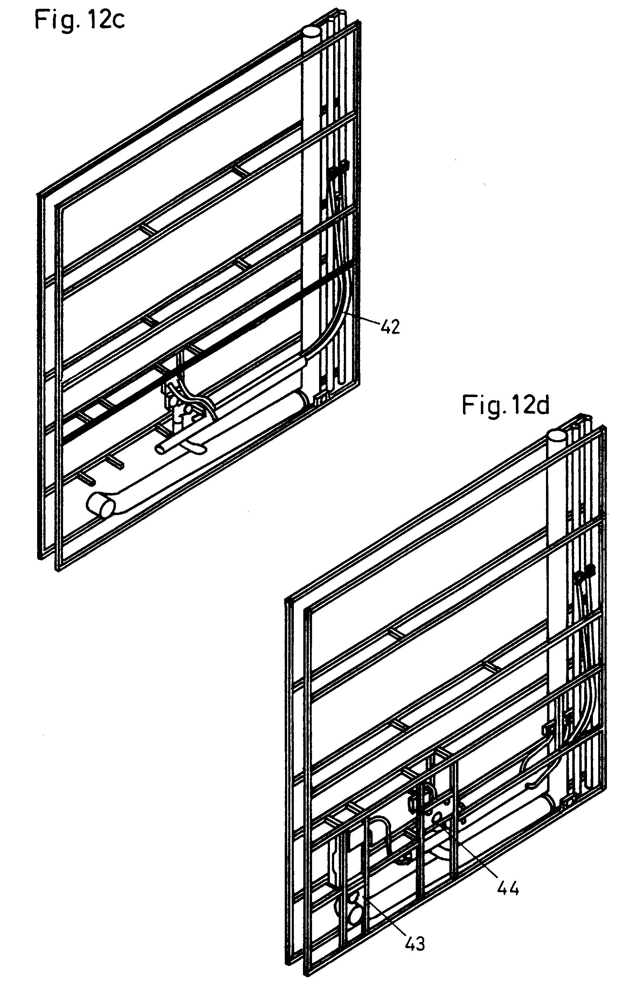

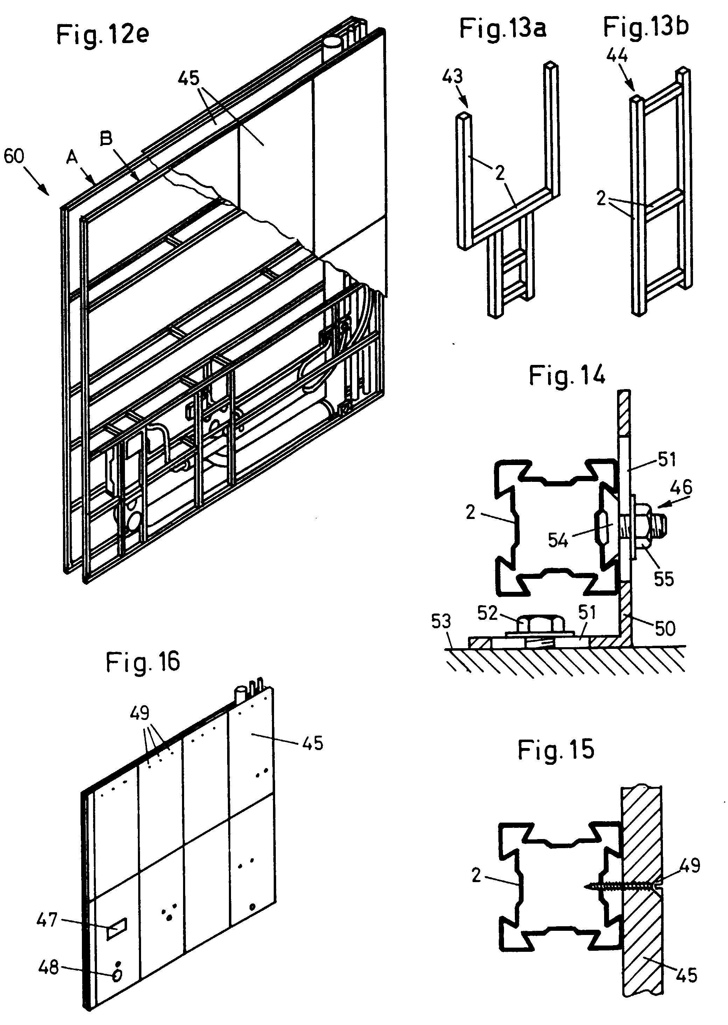

Anhand der Figuren 12 bis 16 soll ein Tragsystem für Sanitärapparate, Armaturen, Rohrteilen und Leitungen und dessen Montage erläutert werden. Die Sanitärapparate sind beispielsweise ein WC, ein Bidet, ein Waschtisch oder ein Urinal. Diese sind an hier nur schematisch gezeigte Abflussrohre 41 und flexible Anschlussleitungen 42 sowie entsprechenden Ast- und Zweigleitungen angeschlossen. Wie aus den Figuren 12c und 12d gut ersichtlich, sind die vertikal verlaufenden Leitungsteile alle seitlich angeordnet und von diesen aus die Astleitungen weitgehend horizontal zu Tragrahmen 43 und 44 für die hier nicht gezeigten Sanitärapparate geführt.

Bei der Montage des Tragsystems werden gemäss Fig. 12a eine Bodenprofilstange 2a, zwei Vertikalprofilstangen 2b und eine Deckenprofilstange 2c zu einem rechteckigen, rahmenförmigen Systemteil A verbunden, wobei vorzugsweise die weiter oben beschriebenen Profilstangen und Verbindungen verwendet werden. Der in Fig. 12a gezeigte Rahmen bildet einen Bezugsrahmen für den weiteren Aufbau des Tragsystems.

Die Boden-, Vertikal- und Deckenprofilstangen 2a, 2b und 2c werden gemäss Fig. 14 mit Winkelstücken 50 am Gebäude befestigt. Dazu weist das Winkelstück 50 zwei Langlöcher 51 auf, durch die zur Befestigung eine geeignete Schraube 52 bzw. ein Gewindestift eines Nutensteins 54, der mit einer Mutter 55 fixiert ist, gesteckt sind.

Nun werden seitlich vertikal verlaufende Rohre und Leitungen 41 am Systemteil A befestigt und weitere horizontal verlaufende Profilstangen 2c und an diesen Querprofilstangen 2d befestigt. In einigen Fällen ist es jedoch vorteilhaft, die Profilstangen 2c vor den Rohren und Leitungen zu montieren. Je nach den anzuschliessenden Sanitärapparaten werden Anschlusselemente 40 und flexible Leitungen 40a mit vertikal verlaufenden Profilstangen 2e am Systemteil A befestigt. Am Systemteil A werden nun vergleichsweise kurze Querprofilstangen 2d angebracht und das Tragprofil mit einem weiteren Systemteil B und horizontal verlaufenden Anschlussleitungen und Rohren zu der in Fig. 12c gezeigten Anordnung ergänzt.

Abschliessend werden die eventuell vormontierten Tragrahmen 43 und 44 angebracht, und mittels Selbstbohrschrauben 49 ein- oder beidseitig das Tragsystem mit Gibskartonplatten 45 abgedeckt. Die Platten 45 werden nun mit den entsprechenden Ausschnitten 47 und 48 für beispielsweise Betätigungsplatten und Rohranschlüsse versehen. Bei beidseitiger Abdeckung gemäss Fig. 12e kann das Tragsystem eine komplette Innenwand bilden. Das Tragsystem kann jedoch auch angelehnt an einer massiven Gebäudewand erstellt werden. Bei dieser Ausführung wird lediglich ein Systemteil B benötigt, das mit Querprofilstangen 2d an der Gebäudewand befestigt wird.

Die Profilstangen 2a, 2b, 2c, 2d und 2e weisen das gleiche Querschnittprofil auf und sind mit gleichen Verbindungsteilen und vorzugsweise den oben beschriebenen Verbindungsteilen 1, 30 und 50 miteinander verbunden.

Mit Hilfe eines an sich bekannten DLS (Distance Least Square) Rechenprogrammes und des genauen Ausmasses der Bausituation können die Bauteile, insbesondere die Längen der genannten Profilstangen, und ihre Position optimal berechnet werden. Der Materialverbrauch und die Montagarbeiten können damit rechnerisch und damit sehr schnell und genau optimiert werden. Dies ermöglicht sehr rationell eine auftragsbezogene Fertigung im Werk. Der Installateur erhält dann einen projektspezifisch zusammengestellten Bausatz mit weitgehend vormontierten Bauteilen. Selbstverständlich kann auch der Installateur die Profile auf die erforderlichen Längen kürzen.

## Patentansprüche

1. Verbindung von zwei im Querschnitt im wesentlichen gleichen Profilstangen (2, 3), insbesondere an einem Tragsystem für Sanitärapparate, mit wenigstens einem Verbindungsteil (1, 30, 50), der die beiden etwa rechtwinklig zueinander angeordneten Profilstangen (2, 3) lösbar miteinander verbindet, wobei die Profilstangen (2, 3) jeweils vier im Querschnitt gesehen im wesentlichen quadratisch angeordnete und von aussen zugängliche, hintergreifbare Längsnuten (20) aufweisen und der Verbindungsteil (1, 30,50) mit einem ersten Ende in Längsrichtung durch eine stirnseitige Oeffnung in einen Längskanal (23) der einen Profilstange (3) eingesetzt und darin durch Klemmung lösbar fixiert ist und mit einem zweiten Ende in eine Längsnut (29) der anderen Profilstange (2) eingesetzt und darin durch Klemmung lösbar fixiert ist, dadurch gekennzeichnet, dass die Wandung (22) der Längsnuten (20) eine Profilierung aufweist, dass der Verbindungsteil (1, 30, 50) mit seinem zweiten in die Längsnut (20) eingreifenden Ende in der Längsnut (20) mit der Profilierung dieser Längsnut (20) in formschlüssigem Eingriff ist, derart, dass dieser Eingriff einer Verschiebung des Verbindungsteils in beiden Längsrichtungen der Profilstange (3) entgegensteht.

2. Verbindung nach Anspruch 1, dadurch gekennzeichnet, dass der Verbindungsteil (1)am zweiten Ende zwei Klemmzungen (10) aufweist, welche die Längsnut (20) seitlich hintergreifen.

3. Verbindung nach Anspruch 1 oder 2, dadurch gekennzeichnet, dass das zweite Ende des Verbindungsteils (1, 30, 50) einen Ansatz (4, 35) aufweist, der in der Längsnut (20) formschlüssig mit der Profilstange (2) in Eingriff ist.

4. Verbindung nach Anspruch 3, dadurch gekennzeichnet, dass der Ansatz (4) ein Keil ist, der in einem Lagergehäuse (8) verschiebbar und zwischen zwei spreizbaren Klemmzungen (10) angeordnet ist.

5. Verbindung nach einem der Ansprüche 1 bis 4, dadurch gekennzeichnet, dass die Profilstangen (2) in den Längsnuten (20) jeweils eine profilierte Fläche (5) aufweisen.

6. Verbindung nach einem der Ansprüche 1 bis 5, dadurch gekennzeichnet, dass der Verbindungsteil (1, 50) zwei einzeln oder gemeinsam verstellbare Keile (4, 13) aufweist, die jeweils mit einer Profilstange (2, 3) in Eingriff bringbar sind.

7. Verbindung nach einem der Ansprüche 1 bis 6, dadurch gekennzeichnet, dass der Verbindungsteil (1) zwei mit Hilfe eines verschiebbaren Keils (13) spreizbar profilierte Laschen (11) aufweist.

8. Verbindung nach Anspruch 7, dadurch gekennzeichnet, dass die Laschen (11) Keilflächen (12) aufweisen, die mit entsprechenden Keilflächen (14) des Keils (13) zum Spreizen der Laschen (11) zusammenwirken.

9. Verbindung nach Anspruch 7 oder 8, dadurch gekennzeichnet, dass die Laschen (11) an einem Lagergehäuse (8) angebracht sind.

10. Verbindung nach einem der Ansprüche 7 bis 9, dadurch gekennzeichnet, dass die Laschen (11) im Querschnitt etwa U-förmig ausgebildet sind und den Keil (13) teilweise umgreifen.

11. Profilstange für ein Tragsystem zur Montage von Sanitärapparaten, Armaturen, Rohrteilen und Leitungen, wobei diese jeweils vier von aussen zugängliche und mit einem Vebindungsteil (1) hintergreifbare Längsnuten (20) zum Verbinden dieser Stangen (2, 3) aufweisen, wobei die Profilstange (2, 3) im Querschnitt gesehen etwa quadratisch ausgebildet ist und in jeder der vier Seiten zur Bildung der Längsnuten (20) eingebuchtet sind und dass die Lägsnuten (20) zur Aufnahme eines Verbindungsteils hintergreifbar ausgebildet sind, dadurch gekennzeichnet, dass die Wandung der Profilstange (2, 3) in ihren Längsnuten (20) eine Profilierung aufweist.

12. Profilstange nach Anspruch 11, dadurch gekennzeichnet, dass die Längsnuten (20) als Schwalbenschwanznuten ausgebildet sind.

13. Profilstange nach Anspruch 11 oder 12, dadurch gekennzeichnet, dass die Profilierung durch quer zur Längsrichtung der Längsnuten (20) sich erstreckende Rillen gebildet ist.

14. Profilstange nach einem der Ansprüche 11 bis 13, dadurch gekennzeichnet, dass ihre Längskanten als im Querschnitt gesehen herzförmige, nach innen offene Flansche (21) ausgebildet sind.

15. Tragsystem für Sanitärapparate, Armaturen, Rohrteile und Leitungen, mit rahmenförmig angeordneten horizontalen und vertikalen Profilstangen (2, 3), die mit Verbindungsteilen (1, 30, 50) lösbar miteinander verbunden sind, wobei die Profilstangen (2, 3) im Querschnitt gesehen jeweils etwa quadratisch ausgebildet und an jeder der vier Seiten verbindbar sind und dass horizontale und vertikale Profilstangen (2, 3) und Verbindungsteile (1, 30, 50) zwei rahmenförmige und im Abstand zueinander in parallelen Ebenen angeordnete Systemteile (A, B) bilden, dass die parallel zueinander angeordneten Systemteile (A, B) durch Querstäbe (2d) miteinander verbunden sind, dass die Querstäbe (2d) ebenfalls Profilstangen sind, die im Querschnitt gleich ausgebildet sind wie die anderen Profilstangen und die ebenfalls gleich verbunden sind, dass Querstäbe (2d) sowie vertikal verlaufende Stäbe (2e) als Tragrahmen (43, 44) für Sanitärapparate und Anschlusselemente (40) ausgebildet sind, dass die Profilstangen (2, 3) jeweils wenigstens an einem Ende abgelängt und im wesentlichen ohne weitere Bearbeitung durch Klemmung lösbar miteinander verbunden sind, dass die Profilstangen (2, 3) hintergreifbare Längsnuten (20) besitzen und die Wandung (22) dieser Längsnuten (20) eine Profilierung aufweist.

16. Verfahren zum Erstellen eines Tragsystems nach Anspruch 15 unter Verwendung von Profilstangen nach Anspruch 11, dadurch gekennzeichnet, dass die Profilstangen (2, 3) von hinten nach vorne montiert werden und dass Bodenprofilstangen (2a), Vertikalprofilstangen (2b) und Dekkenprofilstangen (2c) zu einem Bezugsrahmen miteinander verbunden werden, wobei mit Hilfe eines Rechenprogrammes und des Ausmasses der Bausituation die Länge der Profilstangen (2, 3) und ihre Position optimal berechnet werden, und dass aufgrund der Berechneten Längen die Profilstangen (2, 3) zugeschnitten und zu einem Bausatz mit vormontierten Bauteilen zusammengestellt werden, wobei zur Vormontage die Profilstangen (2, 3) in Formschlüssigen Eingriff durch die Profilierung in der Wandung (22) der Längsnuten (20) gebracht werden, ohne daß eine Verriegelung erfolgt.

## Claims

1. Connection of two sectional bars (2, 3) of substantially identical cross-section, especially at a support system for sanitary apparatus, with at least one connection piece (1, 30, 50), which detachably interconnects the two sectional bars (2, 3) arranged approximately at right angles to one another, wherein the sectional bars (2, 3) each time have four externally accessible longitudinal grooves (20) which are engageable behind and arranged substantially in a square when seen in cross-section and the connection piece (1, 30, 50) is inserted by a first end in longitudinal direction through an end face opening into a longitudinal channel (23) of the one sectional bar (3) and releasably fixed therein by clamping and is inserted by a second end into a longitudinal groove (29) of the other sectional bar (2) and releasably fixed therein by clamping, characterised thereby that the wall (22) of the longitudinal grooves (20) has a profiling, that the connection piece (1, 30, 50) is in mechanically positive engagement, by its second end engaged in the longitudinal groove (20), in the longitudinal groove (20) with the profiling of this longitudinal groove (20) in such a manner that this engagement opposes a displacement of the connection piece in both longitudinal directions of the sectional bar (3).

2. Connection according to claim 1, characterised thereby that the connection piece (1) has at the second end two clamping tongues (10) which laterally engage behind the longitudinal groove (20).

3. Connection according to claim 1 or 2, characterised thereby that the second end of the connecting piece (1, 30, 50) has a projection (4, 35), which is mechanically positively in engagement, in the longitudinal groove (20), with the sectional bar (2).

4. Connection according to claim 3, characterised thereby that the projection (4) is a wedge, which is slidable in a bearing housing (8) and is arranged between two spreadable clamping tongues (10).

5. Connection according to one of claims 1 to 4, characterised thereby that the sectional bars (2) in the longitudinal grooves (20) each time have a profiled surface (5).

6. Connection according to one of claims 1 to 5, characterised thereby that the connection piece (1, 50) has two wedges (4, 13) which are adjustable individually or in common and which can each be brought into engagement with a respective sectional bar (2, 3).

7. Connection according to one of claims to 6, characterised thereby that the connection piece (11) has two profiled straps (11) which can be spread with the aid of a displaceable wedge (13).

8. Connection according to claim 7, characterised thereby that the straps (11) have wedge surfaces (12), which co-operate with corresponding wedge surfaces (14) of the wedge (13) for spreading of the straps (11).

9. Connection according to claim 7 or 8, characterised thereby that the straps (11) are formed at a bearing housing (8).

10. Connection according to one of claims 7 to 9, characterised thereby that the straps (11) are constructed to be approximately U-shaped in cross-section and partly engage around the wedge (13).

11. Sectional bar for a support system for mounting of sanitary apparatus, fittings, pipe lengths and conduits, wherein these each time have four externally accessible longitudinal grooves (20), which are engageable behind by a connecting piece (1), for the connecting of these bars (2, 3), wherein the sectional bar (2, 3) is constructed to be approximately square when seen in cross-section and is bulged inwardly in each of the four sides for formation of the longitudinal grooves (20) and that the longitudinal grooves (20) for reception of a connecting piece are constructed to be engageable behind, characterised thereby that the wall of the sectional bars (2, 3) has a profiling in its longitudinal grooves.

12. Sectional bar according to claim 11, characterised thereby that the longitudinal grooves (20) are constructed as dovetail grooves.

13. Sectional bar according to claim 11 or 12, characterised thereby that the profiling is formed with grooves extending transversely to the longitudinal direction of the longitudinal grooves (20).

14. Sectional bar according to one of claims 11 to 13, characterised thereby that its longitudinal edges are constructed as inwardly open flanges (21) which are heart-shaped when seen in cross-section.

15. Support system for sanitary apparatus, valves, fittings, pipe lengths and conduits, with horizontal and vertical sectional bars (2, 3) which are arranged in frame shape and which are detachably connected together by connecting pieces (1, 30, 50), wherein the sectional bars (2, 3) are constructed to be approximately square as seen in cross-section and are connectible at each of the four sides and that horizontal and vertical sectional bars (2, 3) and connecting pieces (1, 30, 50) form two frame-shaped system parts (A, B) arranged at a mutual spacing and in parallel planes, that the system parts (A, B) arranged parallel to one another are connected together by transverse rods (2d), that the transverse rods (2d) are likewise sectional bars which are constructed in cross-section the same as the other sectional bars and which are likewise connected in same manner, that transverse rods (2d) as well as vertically extending rods (2e) are constructed as support frames (43, 44) for sanitary apparatus and connecting elements (40), that the sectional bars (2, 3) are each time cut to length at least at one end and are detachably connected together by clamping substantially without further processing, and that the sectional bars (2, 3) possess longitudinal grooves (20) which can be engaged behind and the wall (22) of these longitudinal grooves (20) has a profiling.

16. Method of preparing a support system according to claim 15 with use of sectional bars according to claim 11, characterised thereby that the sectional bars (2, 3) are mounted from the back to the front and that floor sectional bars (2a), vertical sectional bars (2b) and ceiling sectional bars (2c) are connected together into a reference frame, wherein the lengths of the sectional bars (2, 3) and their positions are optimally calculated with the aid of a computer program and the dimension of the installation location and that the sectioned bars (2, 3) are cut to size on the basis of the calculated lengths and combined into a constructional kit with preassembled subassemblies, wherein the sectional bars (2, 3) are for the preassembling brought into mechanically positive engagement by the profiling in the wall (22) of the longitudinal grooves (20) without a locking being effected.

## Revendications

1. Assemblage de deux barres profilées (2,3), possédant sensiblement les mêmes sections transversales, notamment dans un système de support pour appareils sanitaires, comportant au moins une pièce d'assemblage (1,30,50), qui relie entre elles de façon amovible les deux barres profilées (2,3) qui sont disposées approximativement perpendiculairement l'une à l'autre, et dans lequel les barres profilées (2,3) possèdent respectivement quatre rainures longitudinales (20) qui sont disposées sensiblement selon une disposition en carré en coupe transversale, sont accessibles de l'extérieur et dans laquelle un accrochage est possible, et la pièce d'assemblage (1,30,50) est insérée par une première extrémité, dans la direction longitudinale, dans une ouverture frontale aménagée dans un canal longitudinal (23) d'une barre profilée (3) et est fixée par serrage, de façon amovible, dans ce canal, et peut être insérée, par une seconde extrémité, dans une rainure longitudinale (29) de l'autre barre profilée (2) et peut y être fixée par serrage, de manière amovible, caractérisé en ce que la paroi (22) des rainures longitudinales (20) est profilée, que la pièce d'assemblage (1,30,50) s'engage par sa seconde extrémité, qui pénètre dans la rainure longitudinale (20), dans cette rainure longitudinale (20) selon un engrènement par formes complémentaires avec le profil de cette rainure longitudinale (20) de sorte que cet engagement s'oppose à un déplacement de la pièce d'assemblage dans les deux directions longitudinales de la barre profilée (3).

2. Assemblage selon la revendication 1, caractérisé en ce que la pièce d'assemblage (1) possède, sur sa seconde extrémité, deux languettes de blocage (10), qui s'accrochent latéralement dans la rainure longitudinale (20).

3. Assemblage selon la revendication 1 ou 2, caractérisé en ce que la seconde extrémité de la pièce d'extrémité (1,30,50) possède un appendice saillant (4,35) qui s'engage dans la rainure longitudinale (20) conformément à une liaison par formes complémentaires avec la barre profilée (2).

4. Assemblage selon la revendication 3, caractérisé en ce que l'appendice saillant (4) est un coin, qui peut être déplacé dans un logement de support (8) et est disposé entre deux languettes de blocage (10) pouvant être écartées.

5. Assemblage selon l'une des revendications 1 à 4, caractérisé en ce que les barres profilées (2) possèdent des surfaces profilées respectives (5) présentes dans les rainures longitudinales (20).

6. Assemblage selon l'une des revendications 1 à 5, caractérisé en ce que la pièce d'assemblage (1,50) possède deux coins (4,13) qui sont déplaçables individuellement ou conjointement et peuvent être amenés à engrener respectivement avec une barre profilée (2,3).

7. Assemblage selon l'une des revendications 1 à 6, caractérisé en ce que la pièce d'assemblage (1) comporte deux pattes profilées (11), qui peuvent être écartées à l'aide d'un coin déplaçable (13).

8. Assemblage selon la revendication 7, caractérisé en ce que les pattes (11) possèdent des surfaces en coin (12), qui coopèrent avec des surfaces en coin correspondantes (14) du coin (13) pour écarter les pattes (11).

9. Assemblage selon la revendication 7 ou 8, caractérisé en ce que les pattes (11) sont vissées sur un logement de support (8).

10. Assemblage selon l'une des revendications 7 à 9, caractérisé en ce que les pattes (11) sont réalisées approximativement en forme de U en coupe transversale et enserrent partiellement le coin (13).

11. Barre profilée pour un système de support pour le montage d'appareils sanitaires, d'éléments de robinetterie, de pièces tubulaires et de canalisations, cette barre profilée possédant respectivement quatre rainures longitudinales (20), qui sont accessibles à partir de l'extérieur et dans lesquelles peut s'accrocher une pièce d'assemblage (1), pour relier ces barres (2,3), la barre profilée (2,3) étant agencée avec une forme approximativement carrée en coupe transversale et étant évidée, dans chacune des quatre faces, pour former les rainures longitudinales (20), et que les rainures longitudinales (20) sont agencées de manière à permettre un accrochage en elles pour loger une pièce d'assemblage, caractérisée en ce que la paroi de la barre profilée (2,3) possède un profil dans ses rainures longitudinales (20).

12. Barre profilée selon la revendication 11, caractérisée en ce que les rainures longitudinales (20) sont agencées sous la forme de rainures en queue d'aronde.

13. Barre profilée selon la revendication 11 ou 12, caractérisée en ce que le profil est formé par des stries qui s'étendent transversalement par rapport à la direction longitudinale des rainures longitudinales (20).

14. Barre profilée selon l'une des revendications 11 à 13, caractérisé en ce que ses bords longitudinaux sont agencés sous la forme de brides (21) ouvertes vers l'intérieur et approximativement en forme de coeur en coupe transversale.

15. Système de support pour des appareils sanitaires, des éléments de robinetterie, des pièces tubulaires et des canalisations, comportant des barres profilées horizontales et verticales (2,3) disposées en formant un cadre et qui sont reliées entre elles de façon amovible par des pièces d'assemblage (1,30,50), les barres profilées (2,3) étant agencées avec une forme approximativement carrée en coupe transversale et pouvant être reliées au niveau de chacun des quatre côtés, et dans lequel des barres profilées horizontales et verticales (2,3) et des pièces d'assemblage (1,30,50) forment deux éléments de système en forme de cadres (A,B) disposés dans des plans parallèles et à distance l'un de l'autre, et dans lequel les éléments de système parallèles (A,B) sont reliés entre eux par des tiges transversales (2d), et dans lequel les tiges transversales (2d) sont également des barres profilées, qui ont une section transversale identique à celle des autres barres profilées et qui sont également reliées de façon identique, et dans lequel des tiges transversales (2d) ainsi que des tiges verticales (2e) sont agencées sous la forme de cadres de support (43,44) pour des appareils sanitaires et des éléments de raccordement (40), et dans lequel les barres profilées (2,3) sont coupées à longueur respectivement au moins à une extrémité et sont reliées entre elles par serrage, de façon amovible, essentiellement sans autre traitement, et dans lequel les barres profilées (2,3) possèdent des rainures longitudinales (20), dans lesquelles un accrochage est possible et que la paroi (22) de ces rainures longitudinales (20) est profilée.

16. Procédé pour établir un système de support selon la revendication 15 moyennant l'utilisation de barres profilées selon la revendication 11, caractérisé en ce que les barres profilées (2,3) sont montées de l'arrière vers l'avant et que des barres profilées de plancher (2a), des barres profilées verticales (2b) et des barres profilées de plafond (2c) sont reliées entre elles pour former un cadre de référence, auquel cas la longueur des barres profilées (2,3) et leur position sont calculées de façon optimale à l'aide d'un programme de calcul et du degré d'avancement de la construction, et qu'on coupe les barres profilées (2,3) sur la base des longueurs calculées et qu'on les assemble pour former un ensemble de construction en utilisant des composants préassemblés, auquel cas pour l'assemblage préalable, on introduit les barres profilées (2,3) conformément à un engagement selon une liaison par formes complémentaires, dans le profil situé dans la paroi (22) des rainures longitudinales (20), sans qu'il se produise un verrouillage.
